# EUROPEAN PATENT SPECIFICATION

(11) **EP 3 335 422 B1**
(45) Date of publication and mention of the grant of the patent: **01.12.2021**
(21) Application number: 15879267.1
(22) Date of filing: 23.12.2015
(51) Int. Cl.: H04N 19/122, H04N 19/60, H04N 19/12, H04N 19/18, H04N 19/189, H04N 19/467

(54) **METHOD AND APPARATUS FOR TRANSFORM CODING WITH BLOCK-LEVEL TRANSFORM SELECTION AND IMPLICIT SIGNALING WITHIN HIERARCHICAL PARTITIONING**
VERFAHREN UND APPARAT FÜR DIE TRANSFORMATIONSKODIERUNG MIT AUSWAHL DER TRANSFORMATION AUF BLOCK-EBENE UND IMPLIZITER SIGNALISIERUNG IN EINER HIERARCHISCHEN PARTITIONIERUNG
PROCÉDÉ ET APPAREIL AVEC SÉLECTION DE TRANSFORMATION AU NIVEAU DU BLOC ET SIGNALISATION IMPLICITE DANS UNE DIVISION EN NIVEAUX HIÉRARCHIQUES

(43) Date of publication of application: 20.06.2018
(73) Proprietor: HUAWEI TECHNOLOGIES CO., LTD., Shenzhen, Guangdong 518129 (CN)
(72) Inventor: FILIPPOV, Alexey Konstantinovich, Shenzhen Guangdong 518129 (CN); RUFITSKIY, Vasily Alexeevich, Shenzhen Guangdong 518129 (CN)
(74) Representative: Gill Jennings & Every LLP
(86) International application number: PCT/RU2015/000921
(87) International publication number: WO 2017/111648

(56) References cited:
- AMONOU (FT) I ET AL: "Description of video coding technology proposal by France Telecom, NTT, NTT DOCOMO, Panasonic and Technicolor", 1. JCT-VC MEETING; 15-4-2010 - 23-4-2010; DRESDEN; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-A114, 13 April 2010 (2010-04-13) , XP030009031,
- COHEN R ET AL: "Low Complexity Embedding of Information in Transform Coefficients", 5. JCT-VC MEETING; 96. MPEG MEETING; 16-3-2011 - 23-3-2011; GENEVA;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JCTVC-SITE/,, no. JCTVC-E428, 12 March 2011 (2011-03-12) , XP030008934, ISSN: 0000-0005
- JING WANG ET AL: "Multiple sign bits hiding for High Efficiency Video Coding", VISUAL COMMUNICATIONS AND IMAGE PROCESSING (VCIP), 2012 IEEE, IEEE, 27 November 2012 (2012-11-27), pages 1-6, XP032309167, DOI: 10.1109/VCIP.2012.6410753 ISBN: 978-1-4673-4405-0
- GORDON CLARE ET AL: "CE11: Sign Data Hiding", 8. JCT-VC MEETING; 99. MPEG MEETING; 1-2-2012 - 10-2-2012; SAN JOSE; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-H0224, 20 January 2012 (2012-01-20), XP030111251,
- J-M THIESSE ET AL: "Data hiding of intra prediction information in chroma samples for video compression", 2010 17TH IEEE INTERNATIONAL CONFERENCE ON IMAGE PROCESSING (ICIP 2010); 26-29 SEPT. 2010; HONG KONG, CHINA, IEEE, PISCATAWAY, NJ, USA, 26 September 2010 (2010-09-26), pages 2861-2864, XP031813491, ISBN: 978-1-4244-7992-4
- FILIPPOV ALEXEY ET AL: "Scalar-quantization-based multi-layer data hiding for video coding applications", 2014 IEEE VISUAL COMMUNICATIONS AND IMAGE PROCESSING CONFERENCE, IEEE, 7 December 2014 (2014-12-07), pages 262-265, XP032741204, DOI: 10.1109/VCIP.2014.7051554 [retrieved on 2015-02-27] cited in the application
- None

## Description

### TECHNICAL FIELD

The present invention generally relates to the field of encoding and decoding of pictures being still pictures or video pictures, and specifically relates to encoding a source picture into an output bitstream using quantized transform coefficients, and to decoding an input bitstream into a decoded picture using inverse transformed transform coefficients. The present invention relates further to an encoder for encoding a source picture and to a decoder for decoding an input bitstream using inverse transformed transform coefficients. Finally, the present invention relates to a computer program having a program code for performing such a method.

### BACKGROUND

Digital video communication and storage applications are implemented by a wide range of digital devices, e.g. digital cameras, cellular radio telephones, laptops, broadcasting systems, video teleconferencing systems, etc. One of the most important and challenging tasks of these applications is video compression. The task of video compression is complex and is constrained by two contradicting parameters: compression efficiency and computational complexity. Video coding standards, such as ITU-T H.264/AVC or ITU-T H.265/HEVC, provide a good tradeoff between these parameters. For that reason support of video coding standards is a mandatory requirement for almost any video compression application.

The state-of-the-art video coding standards are based on partitioning of a source picture into blocks. Processing of these blocks depend on their size, spatial position and a coding mode specified by an encoder. Coding modes could be classified into two groups according to the type of prediction: intra- and inter-prediction modes. Intra-prediction modes use pixels of the same picture to generate reference samples to calculate the prediction values for the pixels of the block being reconstructed. Intra-prediction could be also referred to as spatial prediction. Inter-prediction modes are designed for temporal prediction and uses reference samples of previous or next pictures to predict pixels of the block of the current picture. After a prediction stage, transform coding is performed for a prediction error, or residual error, that is the difference between an original signal and its prediction. Then, the transform coefficients and side information are encoded using an entropy coder, like e.g. Context-Adaptive Binary Arithmetic Coding, CABAC, for AVC/H.264 and HEVC/H.265.

Evidently, prediction errors have different statistics for different prediction modes and strongly depend on the content to be predicted. Hence, different transforms are advantageous from the point of view of compression performance for different cases. To increase the coding efficiency of the transform coding stage, multiple transforms can be used that possess different energy compaction for different particular cases.

According to a first example, the known and recently adopted ITU-T H.265/HEVC standard, defined in ISO/IEC 23008-2:2013, "Information technology - High efficiency coding and media delivery in heterogeneous environments ― Part 2: High efficiency video coding", November 2013, declares a set of state-of-the-art video coding tools that provide a reasonable tradeoff between coding efficiency and computational complexity. An overview on the ITU-T H.265/HEVC standard is given in the article by Gary J. Sullivan, "Overview of the High Efficiency Video Coding (HEVC) Standard", in IEEE Transactions on Circuits and Systems for Video Technology, Vol. 22, No. 12, December 2012.

The HEVC/H.265 video coding standard provides for a division of the source picture into blocks, e.g. coding units, CUs. Each of the CUs could be further split into either smaller CUs or prediction units, PUs. A PU could be intra- or inter- predicted according to the type of processing applied for the pixels of the PU. In case of inter-prediction, a PU represents an area of pixels that is processed by motion compensation using a motion vector specified for a PU. For intra prediction a PU specifies prediction mode for a set of transform units, TUs. A TU can have different sizes like e.g., 4x4, 8x8, 16x16 and 32x32 pixels, and could be processed in different ways. For a TU transform coding is being performed, i.e. the prediction error is being transformed with a discrete cosine transform, DCT, or a discrete sine transform, DST ― in the HEVC/H.265 standard, it is applied to intra-coded blocks ― and quantized. Hence, reconstructed pixels contain quantization noise and blocking artefacts that could influence prediction accuracy.

In comparison to prior known video coding standards using only one transform to keep the design simple, the HEVC/H.265 standard specifies two transforms for intra-coding: DST for 4x4 blocks, and DCT for other blocks. DST is chosen for 4x4 blocks as this transform provides a better energy compaction for small intra-predicted blocks.

According to a further example, in JM/KTA, the known mode-dependent directional transform, MDDT, is proposed to compact residues produced by intra prediction as the residues usually have high energy along the direction of prediction as edges are more difficult to be predicted than smooth areas. It consists of a series of pre-defined separable transforms; each transform is efficient in compacting energy along one of the prediction directions, thus favoring one of the intra modes. The type of MDDT is coupled with the selected intra prediction mode, so is not explicitly signaled.

For inter prediction errors, which also contain direction information, MDDT cannot be used, unless the edge directions are explicitly detected and transmitted. However, the side information thus introduced is significant and hurts the overall performance improvement. Hence, MDDT is proposed only to intra-coded macroblocks.

Twenty-two separable transforms are pre-defined for the 22 intra prediction modes; each consists of two transform matrices for the horizontal and vertical transforms. The memory to store all the MDDT matrices is about 1.5Kb. The transform matrices are derived based on a large set of video sequences, which are all intra-coded. All the blocks are classified into 22 categories, according to their relevant intra prediction modes. For each category of blocks, the horizontal and vertical correlation matrices of the prediction errors are calculated, of which the eigenvectors are used to construct the horizontal and vertical transform matrices, respectively. The matrix derivation procedure of MDDT is similar to that of Karhunen-Loève-Transform, KLT, but MDDT is not optimal, because MDDT is separable and designed based on general statistics, which may not accord with local statistics of certain video sequences. Furthermore, basis vectors of MDDT, containing only integers, are the scaled and rounded versions of the eigenvectors, and are not orthogonal to each other.

It is well known that separable transforms efficiently deal with horizontal and vertical edges, because the basis images contain only horizontal and vertical edges, like checkerboards. MDDT ― although a type of separable transform ― is used to compact energy along arbitrary directions, which seems quite contradictory. The basis images of MDDT for different intra prediction modes are studied. It is found that although the basis images also have checkerboard patterns, the positions of zero-crossings are different from those of DCT or integer cosine transform, ICT.

In MDDT, motivated by the observation that each intra mode has distinct directional information statistically, one transform matrix is employed for each intra mode. Although this requires no additional signaling information or rate distortion search, within each intra mode, one transform matrix may not be able to accommodate the potential variability of the residual characteristics because of the diversity of image content.

According to a further example, in the known rate-distortion-optimized transform, RDOT, the prediction residuals are transformed with different basis functions and the best one is selected in terms of the rate-distortion, R-D, performance. In RDOT, for each intra direction, there are distinct K pairs of vertical and horizontal transform candidates trained off-line, which produce totally K different transform paths for each intra mode. The encoder tries all the candidates and selects the optimal path with minimum R-D cost value. The transform indices are explicitly signaled in the bitstream. Compared with MDDT, RDOT further refines the transform by imposing both mode and data-dependency, and thus better energy compaction can be achieved in the transform domain. Though RDOT can extend the MDDT by providing more transform matrices, for each transform path, the encoder has to perform transform, quantization, entropy coding, de-quantization, inverse transform and reconstruction, which imposes high computational burden to the encoder.

In light of this limitation, several fast RDOT schemes may also be employed to collaboratively accelerate the encoding process, see X. Zhao, L. Zhang, S. Ma, and W. Gao, "Video coding with rate-distortion optimized transform," IEEE Trans. Circuits Syst. Video Technol., vol. 22, no. 1, pp. 138-151, Jan. 2012. One approach is to employ coding results of the DCT to skip the unnecessary RDOT trails. Specifically, DCT is implemented prior to RDOT, and if the R-D cost with DCT is lower than a threshold, the RDOT will be performed. This indicates that the RDOT will only be performed when DCT can also achieve a good coding performance, as the optimal DCT- and RDOT-based coding modes are highly correlated. The other approach is to apply the luminance coding speedup, LCS, technique in RDOT. In LCS, the luminance coding results for the DC intra-prediction mode for chroma are restored for the remaining modes.

Unlike the training based approaches, inspired by the separable directional 2-D DCT in image coding, a new structure of Direction-Adaptive Residual Transform, DART, is proposed in R. A. Cohen, S. Klomp, A. Vetro, and H. Sun, "Direction-adaptive transforms for coding prediction residuals," in Proc. IEEE Int. Conf. Image Process. (ICIP), 2010, pp. 185-188. DART comprises a primary and a secondary transform. In the primary transform stage of DART, different 1-D transforms are employed along each oriented path in each direction. Then only the DC coefficients produced by the first stage are processed with DCT in the secondary transform stage. In some cases, short DCT paths are observed, and this may limit the performance of DCT. To address this issue, path folding is performed by combining pixels from neighboring scans. Compared with the existing KLT-based mode dependent directional transforms, this method is more flexible as no training is required to perform. The DART scheme has been implemented into the H.264/ KTA software and better coding performance is observed compared to MDDT.

According to a further example, another way of increasing the efficiency of residual transform coding is to use adaptive multiple transform, AMT, also referred to as enhanced multiple transform, EMT, see Gary Sullivan, Gill Boyce, Jianle Chen, and Elena Alshina, "Future video coding: Joint Exploration Model 1 (JEM1) for future video coding investigation," ITU-T SG16 Q6, TD 213 (WP 3/16). In addition to DCT-II and 4x4 DST-VII, which have been employed in High-Efficiency Video Coding, HEVC, AMT is used for residual coding for both inter and intra coded blocks. It utilizes multiple selected transforms from the DCT/DST families other than the current transforms in HEVC. The newly introduced transform matrices are DST-VII, DCT-VIII, DST-I and DCT-V.

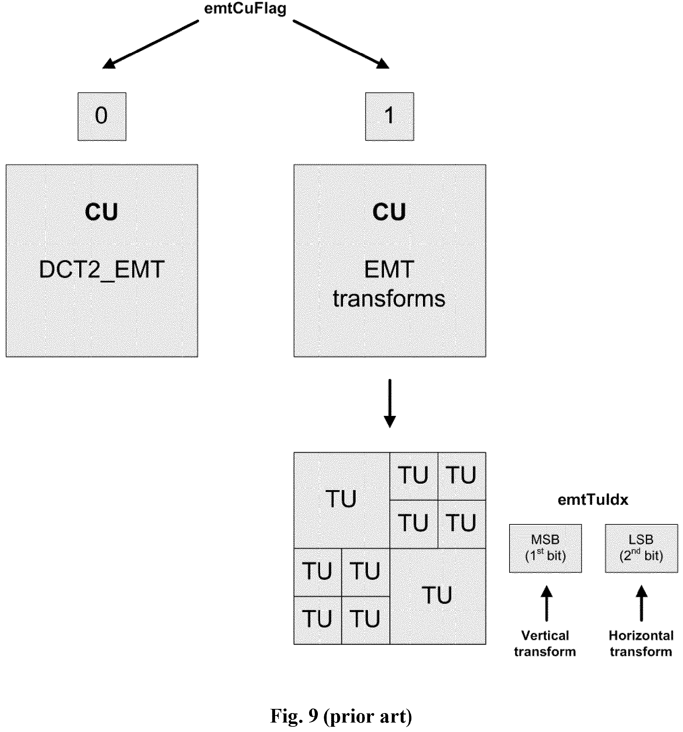

Fig. 9 shows a signaling of transform coding according to AMT. The AMT applies to CUs smaller than 64x64, and whether AMT applies or not is controlled at CU level for all TUs within a CU. For each TU within an AMT enabled CU, the horizontal or vertical transform to be used is signaled by an index to a selected transform set. Each transform set is formed by selecting two transforms from the aforementioned transform matrices.

As shown in Fig. 9, at the CU level, the flag emtCuFlag is used to select one of two options. The first option consists in applying DCT-II (DCT2_EMT) to residual transform coding that does not require additional bits. The second option consists in applying one of the transforms included into a transform set denoted as EMT transforms in Fig. 9.

According to the first option, all the TUs contained in a given CU are decomposed using DCT-II. According to the second option, two additional bits of signaling ― so called emtTuIdx ― are needed for each TU. For intra-coding, a look-up table is used to map an intra-prediction mode to a transform set that only contains two transforms. For intercoding, the transform set of {DCT-VIII, DST-VII} is always used. Thus, two bits are enough to encode the choice of vertical and horizontal transforms. All the above listed bits are encoded using CABAC with context modeling.

For intra prediction residual, the transform sets are pre-defined based on the intra prediction mode thus each intra prediction mode has its own transform set. For example, one transform set can be {DCT-VIII, DST-VII}. Note that the transform set for the horizontal transform may be different from the transform set for the vertical transform, even for a same intra prediction mode. However, the total number of different transform sets for all intra prediction modes as well as the number of newly introduced transforms is limited. For inter prediction residual, however, only one transform set is used for all inter modes and for both horizontal and vertical transforms.

An important aspect for any transform procedure where one of multiple transforms should be selected is signaling, because signaling may significantly impact the coding performance. In HEVC/H.265, signaling is not needed because a transform type can be detected by parsing intra-prediction mode and block size. Similarly, MMDT does not require any signaling as directional transforms are unambiguously mapped to intra-prediction modes. In the case of RDOT, signaling is required as a transform is selected in the rate-distortion optimization, RDO, procedure and cannot be detected at the decoder side without additional information i.e. without signaling. AMT requires signaling as well.

A data hiding technique in the form of a Sign Data Hiding technique is described in Gordon Clare, Félix Henry, Joël Jung, "Sign Data Hiding", Orange Lab's contribution to JCT-VC meeting, JCTVC-G271, Geneva, November 2011. With minor modifications, it has been adopted for the HEVC/H.265 standard as Sign Bit Hiding, SBH. In the case of video compression, the matrix of quantized transform coefficients can be is split into Coefficient Groups, CGs, and transformed into a one-dimensional array according to coefficients scan order so these coefficients could be efficiently coded by an entropy coder. For example, the ITU T H.265/HEVC standard specifies horizontal, vertical and diagonal scan orders. Selection of the scan order according to this standard depends on the block prediction mode and thus on statistical properties of residual signal.

A TU may be split in several CGs, and in each CG the positions of the first and the last non-zero quantized transform coefficients are specified. These positions could be specified only within the context of the specific scan order, because the first and last elements could be determined only for the ordered set.

Sign Data Hiding technique assumes hiding of just a single sign flag within a given set of values, or modifiable coefficients, that is defined as an interval bounded by the last and the first non-zero quantized transform coefficient. This technique is beneficial not in all the cases, and therefore a special decision is taken whether to apply an implicit or an explicit sign coding within a given CG.

There is a procedure of sign hiding condition check at the decoder side. Specifically, this decision is based on the number of transform coefficients or modifiable coefficients. If this number is larger than a threshold, the first sign of the first transform coefficient is inferred from the parity of the sum of the residue. Otherwise, normal explicit decoding of the coefficients' signs is performed, as can be taken from US20130272424A1.

In EP2675159A1, a method of multi-bit information hiding using overlapping subsets is disclosed. The initial set of transform coefficients within a CG is divided into partially overlapping subsets so that values of hidden signs for both partially overlapping subsets could be controlled by modifying a value within the overlapping region. The first sign bit is based upon a parity value determined using the first subset, and the second sign bit is based upon a parity value determined using the second subset. The first subset and the second subset overlap in the sense that coefficients are part of both subsets.

AMONOU (FT) I ET AL, "Description of video coding technology proposal by France Telecom, NTT, NTT DOCOMO, Panasonic and Technicolor", 1. JCT-VC MEETING; 15-4-2010 - 23-4-2010; DRESDEN; (JOINT COLLABORATIVE TEAM ON VIDEO CODING OF ISO/IEC JTC1/SC29/WG11 AND ITU-T SG.16 ); URL HTTP://WFTP3.ITU.INT/AV-ARCH/JCTVC-SITE/ (20100413), no. JCTVC-A114, XP030009031 discloses an encoding technique in which, for transform sizes smaller than 16x16, no explicit flag is sent to indicate which transform is used for each block. Instead, the flag is incorporated within the transform coefficients themselves to reduce overhead.

COHEN R ET AL, "Low Complexity Embedding of Information in Transform Coefficients", 5. JCT-VC MEETING; 96. MPEG MEETING; 16-3-2011 - 23-3-2011; GENEVA;(JOINT COLLABORATIVE TEAM ON VIDEO CODING OF ISO/IEC JTC1/SC29/WG11AND ITU-T SG.16 ); URL HTTP://WFTP3.ITU.INT/AV-ARCH/JCTVC-SITE/ (20110312), no. JCTVC-E428, ISSN 0000-0005, XP030008934 discloses a method for embedding transform decision information in quantized transform coefficients. To embed the information, the last non-zero coefficient may be adjusted during the coefficient scanning process.

### SUMMARY

Having recognized the above-mentioned disadvantages and problems, the present invention aims to improve the state of the art. In particular, the object of the present invention is to provide an encoder, a decoder, an encoding method, and a decoding method for an improved coding and decoding of pictures.

The present invention particularly intends to improve the use of quantized transform coefficients in the encoding and decoding. The invention also intends to improve the encoding and decoding in terms of signaling mechanism so as to keep the signaling overhead low.

The above-mentioned object of the present invention is achieved by the solution provided in the enclosed independent claims. Advantageous implementations of the present invention are further defined in the respective dependent claims.

A first aspect of the present invention provides an encoder for encoding a source picture into an output bitstream using quantized transform coefficients. The encoder comprises obtaining means adapted to obtain, from the source picture, input data located in a transform block. The encoder comprises transform means adapted to transform, according to a transform type selected from among a set of transform types, the input data into transform coefficients. The encoder comprises quantization means adapted to quantize the transform coefficients to generate the quantized transform coefficients. The encoder comprises computing means adapted to generate index information adapted to identify the selected transform type among the set of transform types, and to determine information to be hidden, wherein the information to be hidden is a part of the index information. The encoder comprises hiding means adapted to hide the information to be hidden in the quantized transform coefficients. The encoder further comprises signaling means, wherein the signaling means is adapted to add, in the output bitstream, signaling information being another part of the index information, so that the transform type selected among the set of transform types is identifiable based on the hidden information and the signaling information.

Thereby, it is proposed to hide information regarding the selected transform type, i.e. to hide information adapted to partially identify the selected transform type among the set of transform types. Advantageously, the explicit signaling of the index information may be reduced. The bit rate of the output bitstream may consequently be reduced.

Specifically, the hidden information consisting of only a part of the index information is advantageous in that the amount of explicit signaling needed for identifying the selected transform type may be reduced. In other words, hiding information adapted to identify a sub-set containing the selected transform type is advantageous. The output bitstream may for example comprise the hidden information in the quantized transform coefficients, as well as signaling information transmitted as explicit signaling, said signaling information being added to the output bitstream in addition to the quantized transform coefficients. Then the hidden information allows for an identification of the sub-set containing the selected transform type, and the additional signaling information allows for an identification of the selected transform type within the sub-set. Since it is not necessary that the signaling information identifies the selected transform type within the whole set of transform types, the size or amount of signaling information may be reduced.

In a first implementation form of the encoder according to the first aspect, the hiding means is adapted to hide the information to be hidden in the quantized transform coefficients depending on a hiding condition.

In a second implementation form of the encoder according to the first aspect, the hiding condition comprises a comparison of a parameter depending on the quantized transform coefficients to a threshold. The hiding means is adapted to check the hiding condition, and to hide the information to be hidden in the quantized transform coefficients only if the hiding condition is true.

In a third implementation form of the encoder according to the first aspect, if the hiding condition is false, signaling means is adapted to add, in the output bitstream, signaling information being the index information.

In a fourth implementation form of the encoder according to the first aspect, the encoder comprises partitioning means adapted to recursively partition the source picture according to a hierarchically layered data structure, one layer of the data structure being the transform block. The information to be hidden is a part of the index information, and the hiding means is adapted to hide the information to be hidden in a first layer of the data structure and signaling means is adapted to add, in the output bitstream, signaling information being another part of the index information in a second layer of the data structure that is distinct from the first layer.

In a fifth implementation form of the encoder according to the first aspect, the encoder comprises partitioning means adapted to recursively partition the source picture according to hierarchically layered data structure, one layer of the data structure being the transform block. The partitioning means is adapted to partition the transform block into a plurality of coefficient groups. The hiding means is adapted to hide the information to be hidden in the quantized transform coefficients located in at least one of the plurality of coefficient groups.

In an sixth implementation form of the encoder according to the first aspect, the computing means is adapted to apply a check-function to the quantized transform coefficients to obtain a result of the check-function. The computing means is adapted to determine whether the result of the check-function corresponds to the information to be hidden. If the result of the check-function does not correspond to the information to be hidden, the computing means is adapted to modify at least one of the quantized transform coefficients, so that the result of the check-function corresponds to the information to be hidden.

In a seventh implementation form of the encoder according to the first aspect, the information to be hidden comprises a flag having a first and a second value. The first value identifying that a default transform type of the set of transform types is the selected transform type. The second value indicating that the selected transform type is comprised in a sub-set consisting in the set of transform types without the default transform type.

A second aspect of the present invention provides a decoder for decoding an input bitstream into a decoded picture using inverse transformed transform coefficients. The decoder comprises obtaining means adapted to obtain, from the input bitstream, quantized transform coefficients located in a transform block. The decoder comprises dequantization means adapted to dequantize the quantized transform coefficients to generate transform coefficients. The decoder comprises computing means adapted to reconstruct hidden information from the quantized transform coefficients, wherein the hidden information is a part of the index information. The decoder comprises inverse transform means adapted to inverse transform, according to a transform type identified from among a set of transform types by means of index information, the transform coefficients into the inverse transformed transform coefficients. The decoder further comprises extracting means adapted to extract, from the input bitstream, signaling information being another part of the index information, so that the transform type is identified from among the set of transform types based on the hidden information and the signaling information

In a first implementation form of the decoder according to the second aspect, the computing means is adapted to reconstruct the hidden information from the quantized transform coefficients depending on a hiding condition.

In a second implementation form of the decoder according to the second aspect, the hiding condition comprises a comparison of a parameter depending on the quantized transform coefficients to a threshold. The computing means is adapted to check the hiding condition, and to reconstruct the hidden information from the quantized transform coefficients only if the hiding condition is true.

In a third implementation form of the decoder according to the second aspect, if the hiding condition is false, extracting means is adapted to extract, from the input bitstream, signaling information being the index information.

In a fourth implementation form of the decoder according to the second aspect, the decoder comprises inverse partitioning means adapted to obtain the decoded picture by inverse partitioning a hierarchically layered data structure, one layer of the data structure being the transform block. The hidden information is a part of the index information, and the computing means is adapted to reconstruct the hidden information from a first layer of the data structure and extracting means is adapted to extract, from the input bitstream, signaling information being another part of the index information in a second layer of the data structure that is distinct from the first layer.

In a fifth implementation form of the decoder according to the second aspect, the decoder comprises inverse partitioning means adapted to obtain the decoded picture by inverse partitioning a hierarchically layered data structure, one layer of the data structure being the transform block. The inverse partitioning means is adapted to obtain the transform block by inverse partitioning a plurality of coefficient groups. The computing means is adapted to reconstruct the hidden information from the quantized transform coefficients located in at least one of the plurality of coefficient groups.

In an sixth implementation form of the decoder according to the second aspect, the computing means is adapted to apply a check-function to the quantized transform coefficients to obtain a result of the check-function, wherein the result of the check-function corresponds to the hidden information.

In a seventh implementation form of the decoder according to the second aspect, the hidden information comprises a flag having a first and a second values, the first value identifying that a default transform type of the set of transform types is the identified transform type, and the second value indicating that the identified transform type is comprised in a sub-set consisting in the set of transform types without the default transform type.

The functions of the encoder according to the first aspect and the functions of the decoder according to the second aspect and any functions of any of their implementation forms may be performed by a processor or a computer, and any of their means may be implemented as software and/or hardware in such a processor or computer.

A third aspect of the present invention provides a method for decoding an input bitstream into a decoded picture using inverse transformed transform coefficients. The method comprises obtaining, from the input bitstream, quantized transform coefficients located in a transform block. The method comprises dequantizing the quantized transform coefficients to generate transform coefficients. The method comprises reconstructing hidden information from the quantized transform coefficients, wherein the hidden information is a part of the index information. The method comprises inverse transforming, according to a transform type identified from among a set of transform types by means of index information, the transform coefficients into the inverse transformed transform coefficients. The method comprises extracting, from the input bitstream, signaling information being another part of the index information, so that the transform type is identified from among the set of transform types based on the hidden information and the signaling information.

The method according to the third aspect or any of its implementation forms may be performed by a processor or a computer.

Further features or implementations of the method for decoding an input bitstream into a decoded picture using inverse transformed transform coefficients according to the third aspect of the invention may perform the functionality of the decoder according to the second aspect of the invention and its different implementation forms.

It will be appreciated that the method of the third aspect can be implemented by a computer program having a program code for performing the method for decoding an input bitstream according to the third aspect of the invention when the computer program runs on a computing device.

An important aspect of the invention is that, at the decoder side, the full or partial information on what inverse transform should be selected is retrieved by applying a check-function, e.g. a parity check function, to parsed quantized transform coefficients. The invention relates to signaling of the selected transform type. Specifically, at the decoder side, the full or partial information on what inverse transform should be selected is retrieved by applying a check-function, e.g. parity check-function, to parsed quantized transform coefficients, QTCs. This type of implicit signaling may be referred to as hiding.

It has to be noted that all devices, elements, units and means described in the present application could be implemented in software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be fully formed by external entities not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above aspects and implementation forms of the present invention will be explained in the following description of specific embodiments in relation to the enclosed drawings, in which
Fig. 1 shows an encoder according to an embodiment of the present invention.
Fig. 2 shows a decoder according to an embodiment of the present invention.
Fig. 3 shows an encoder according to a further embodiment of the present invention.
Fig. 4 shows a flowchart of a decoding method according to an embodiment of the present invention.
Fig. 5 shows a flowchart of a decoding method according to a further embodiment of the present invention.
Fig. 6 shows a flowchart of a decoding method according to a further embodiment of the present invention.
Fig. 7 shows a method for encoding a source picture according to an embodiment of the present invention.
Fig. 8 shows a method for decoding an input bitstream according to a further embodiment of the present invention.
Fig. 9 shows a signaling of transform coding according to the prior art.

### DETAILED DESCRIPTION OF EMBODIMENTS

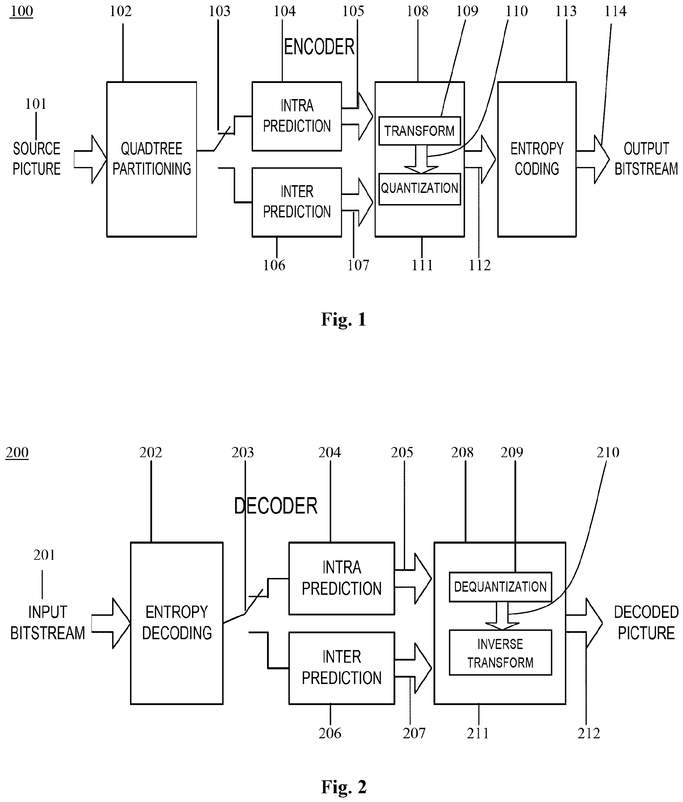

Fig. 1 shows an encoder 100 according to an embodiment of the present invention, and specifically an encoder 100 for encoding a source picture 101 into an output bitstream 114 using quantized transform coefficients 112.

The encoder 100 comprises obtaining means 102, 104, 106 adapted to obtain, from the source picture 101, input data located in a transform block TU.

The encoder 100 comprises transform means 109 adapted to transform, according to a transform type selected from among a set of transform types, the input data into transform coefficients 110.

The encoder 100 comprises quantization means 111 adapted to quantize the transform coefficients 110 to generate the quantized transform coefficients 112.

The encoder 100 comprises computing means adapted to generate index information adapted to identify the selected transform type among the set of transform types, and to determine information to be hidden, wherein the information to be hidden is at least a part of the index information.

The encoder 100 comprises hiding means adapted to hide the information to be hidden in the quantized transform coefficients 112.

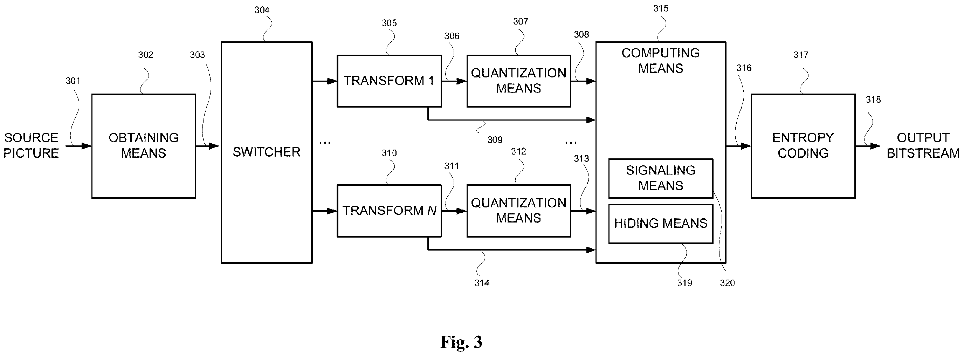

Fig. 3 shows an encoder according to a further embodiment of the present invention, and specifically an encoder 300 for encoding a source picture 301 into an output bitstream 318 using quantized transform coefficients 308, 313.

The encoder 300 comprises obtaining means 302 adapted to obtain, from the source picture 301, input data 303 located in a transform block TU.

The encoder 300 comprises transform means 305, 310 adapted to transform, according to a transform type selected from among a set of transform types 305, 310, the input data 303 into transform coefficients 306, 311.

The encoder 300 comprises quantization means 307, 312 adapted to quantize the transform coefficients 306, 311 to generate the quantized transform coefficients 308, 313.

The encoder 300 comprises computing means 315 adapted to generate index information adapted to identify the selected transform type among the set of transform types 305, 310, and to determine information to be hidden, wherein the information to be hidden is at least a part of the index information.

The encoder 300 comprises hiding means 319 adapted to hide the information to be hidden in the quantized transform coefficients 308, 313.

Particularly, the source picture may be a still picture or a picture of a video.

Particularly, the encoder may comprise partitioning means. Partitioning means is identified in Fig. 1 by the reference 102. The partitioning means is adapted to recursively partition the source picture 101 according to a hierarchically layered data structure. One layer of the data structure is the transform block. The partitioning means may be particularly adapted to carry out a quadtree partitioning of the source picture 101.

The hierarchically layered data structure may comprise further layers defining at least one of a Coding Tree Unit, CTU, a Coding Unit, CU, a Prediction Unit, PU, or a Transform Unit, TU. The CTU is the root of a coding structure of a video sequence of a pre-defined size, containing a part of a picture, e.g. 64x64 pixels. A CTU can be partitioned into CUs. A CU is a basic coding structure of the video sequence of a pre-defined size, containing a part of a picture, which is belonging to a CTU. A CU can be partitioned into further CUs. A PU is a coding structure which is the result of the partitioning of a CU. A PU could be intra- or inter- predicted according to the type of processing applied for the pixels of PU. A PU can be partitioned to several TUs or coincide with a single TU. The TU is an example of transform block.

Particularly, the obtaining means 102, 104, 106, 302 may be adapted to obtain the input data 303 of the transform block from residual data of a prediction block, the PU being an example of prediction block. The input data 303 may be a sub-part of the residual data, i.e. the transform block TU may be a sub-block of the prediction block PU. As such, the encoder may be adapted to encode a source picture 101 of a video.

In Fig. 1 residual data correspond to reference 105, 107. The obtaining means comprises prediction means 104, 106 adapted to build a difference between data of pixels of the source picture 101, i.e. data of pixels located in the prediction block, and prediction data for said pixels to obtain the residual data 105, 107. The prediction means preferably supports both intra- and inter-prediction modes, and correspondingly comprises intra prediction means 104 and inter prediction means 106. Reference 103 in Fig. 1 illustrates the fact that the source picture 101 may be processed by intra- or inter-prediction.

Particularly, the obtaining means may alternatively be adapted to obtain the input data 303 being data of pixels of the source picture 101, for example according to one layer of the hierarchically layered data structure. As such, the encoder does not contain a prediction stage and may be adapted to encode a source picture 101 being a still picture.

Particularly, the encoder may comprise a switcher 304 to send the input data 303 to the set of transform types 305, 310, so as to perform several candidate transforms based on the input data. The input data may be processed by several parallel arranged transform means 305, 310, each transform means being adapted to transform the input data according to one of the transform types. The set of transform types may comprise N different types, wherein the N transform types are identified in Fig. 3 as "Transform 1" and "Transform N".

Each transform means 305, 310 generates transform coefficients 306, 311 as well as the index information 309, 314 identifying the respective transform type used for obtaining the transform coefficients 306, 311. The transform coefficients 306, 311 are quantized by quantization means 307, 312 so as to obtain quantized transform coefficients.

The hiding means 319 is adapted to hide the information to be hidden in the quantized transform coefficients 308, 313. The computing means 315 is adapted to select the quantized transform coefficients 308, 313 and the associated index information 309, 314 that provide the minimum rate-distortion, RD, cost. The computing means 315 correspondingly outputs the selected quantized transform coefficients 316 that are then preferably entropy coded by entropy means 317. The entropy means are indentified in Fig. 1 by reference 113.

The different features of the embodiments of Figs. 1 and 3 may be combined together.

Particularly, the hiding means 319 is adapted to hide the information to be hidden in the quantized transform coefficients 112, 308, 313 according to a data hiding technique.

Particularly, the hiding means 319 is adapted to hide the information to be hidden in the quantized transform coefficients 112, 308, 313 depending on a hiding condition. The hiding condition may comprise a comparison of a parameter depending on the quantized transform coefficients 112, 308, 313 to a threshold, and the hiding means 319 may be adapted to check the hiding condition, and to hide the information to be hidden in the quantized transform coefficients 112, 308, 313 only if the hiding condition is true.

The hiding condition can be a comparison of the quantized transform coefficients 112, 308, 313 with a threshold constraint. For example, the hiding condition can comprise the following conditions or other known hiding conditions:
- Number of non-zero quantized transform coefficients, QTC, being greater than a threshold value. In this case, the number of non-zero QTC present in a TU or CG is counted. If this number is above the threshold, the hiding condition is true.
- A threshold value is lower than a maximum difference between positions of significant QTCs within a scan of QTCs. In this case, the QTCs of a TU or of a CG or of a plurality of CGs are scanned according to a scanning pattern or scanning order. Significant QTCs are selected from the scanned QTCs, the significant QTCs being for example non-zero coefficients or coefficients above a given value. The difference between the positions of the significant QTCs according to the scanning pattern or scanning order is computed. If this difference is above the threshold, the hiding condition is true.
- Size of a TU is greater than a threshold value. In this case, the hiding condition is true if the size of the TU is above the threshold.

Particularly, the computing means 315 is adapted to apply a check-function to the quantized transform coefficients 112, 308, 313 to obtain a result of the check-function, determine whether the result of the check-function corresponds to the information to be hidden, and if not, modify at least one of the quantized transform coefficients 112, 308, 313 so that the result of the check-function corresponds to the information to be hidden.

For example, the check-function could be one of the following functions or other known check-functions:
- a parity check-function applied to the least significant bits of some QTCs selected from a TU using a binary pattern, and
- a parity check-function applied to a position index of the last or first non-zero QTC or to a linear combination of last and first non-zero QTC position index.

Such a parity check-function applied to given QTCs consists in checking the parity value of the given QTCs. Since the information to be hidden comprises one or several bits, one such bit can be hidden by means of the parity value of the given QTCs. In particular, if the parity value of the given QTCs matches the parity of the bit to be hidden, no additional processing is needed at the encoder. This means that the given QTCs are encoded in unamended form in the bitstream. On the other hand, if the parity value of the given QTCs does not match the parity of the bit to be hidden, then the encoder is adapted to modify the given QTCs in such a way that their parity matches the parity of the bit to be hidden. This may be achieved e.g. by modifying the value of one of the given QTCs to obtain the parity matching. For example, the Least Significant Bit, LSB, of one of the given QTCs may be modified.

Generally, for hiding information on transform types, different known mechanisms may be used, such as a single-layer data hiding in non-overlapping sets of transform coefficients as it is done for multiple sign bits hiding according to US20130272424A1, or a single-layer data hiding in overlapping sets of transform coefficients according to EP2675159A1, or multi-layer data hiding in hierarchically structured coding units according to Alexey Filippov, Vasily Rufitskiy, and Vladimir Potapov, "Scalar-quantization-based multi-layer data hiding for video coding applications," IEEE Visual Communications and Image Processing Conference, December 2014, Valletta, Malta, pp. 262-265.

Fig. 2 shows a decoder 200 according to an embodiment of the present invention, and specifically a decoder 200 for decoding an input bitstream 201 into a decoded picture 212 using inverse transformed transform coefficients.

The decoder comprises obtaining means 202, 204, 206 adapted to obtain, from the input bitstream 201, quantized transform coefficients located in a transform block TU.

The decoder comprises dequantization means 209 adapted to dequantize the quantized transform coefficients to generate transform coefficients 210.

The decoder comprises computing means 208 adapted to reconstruct hidden information from the quantized transform coefficients, wherein the hidden information is at least a part of the index information.

The decoder comprises inverse transform means 211 adapted to inverse transform, according to a transform type identified from among a set of transform types by means of index information, the transform coefficients 210 into the inverse transformed transform coefficients 212.

The decoder 200 of Fig. 2 is the counterpart of the encoder 100 of Fig. 1 in that the obtaining means comprises an entropy decoding means 202 for processing the input bitstream. It also comprises prediction means 204, 206 for respectively intra- and inter-prediction modes, wherein reference 203 illustrates the choice between intra- and inter-prediction. The respective outputs 205, 207 of the prediction means 204, 206 are processed by the dequantization means 209.

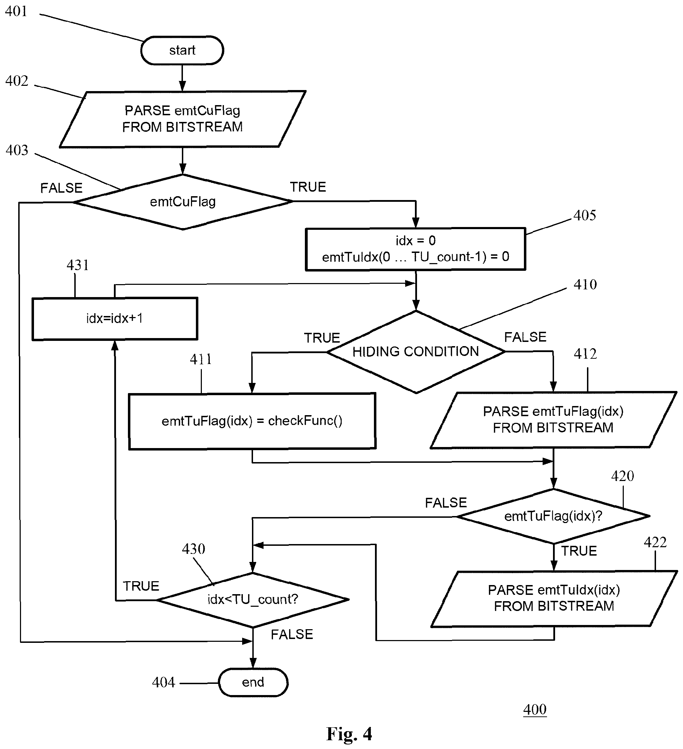

Fig. 4 shows a flowchart of a decoding method according to an embodiment of the present invention.

The embodiment relies on the known Enhanced Multiple Transform, EMT, technique ― described e.g. in Gary Sullivan, Gill Boyce, Jianle Chen, and Elena Alshina, "Future video coding: Joint Exploration Model 1 (JEM1) for future video coding investigation," ITU-T SG16 Q6, TD 213 (WP 3/16) ― using dedicated signaling flags emtCuFlag and emtTuIdx in a bitstream syntax that explicitly indicate selected transform type at the decoder side.

Now, in the embodiment of Fig. 14, an emtCuFlag is coded explicitly at the CU or PU level and an emtTuFlag is coded implicitly at TU level within QTCs according to the encoding scheme of the present invention. In other words, the emtTuFlag is the information that is hidden in the QTCs by the encoder and the information that is reconstructed from the QTCs by the decoder.

After the start 401 of the method, the emtCuFlag is parsed from the input bitstream. The value of the emtCuFlag is then checked 403. If this emtCuFlag is false, a first transform type, e.g. DCT-II, is applied at the CU or PU level, i.e. the inverse transform means 211 applies an inverse transform according to this first transform type for each TU of the CU or PU comprising the emtCuFlag. This first transform type is e.g. a default transform type. If this emtCuFlag is true, a further transform type is used by the inverse transform means 211. In this case, different transform types are enabled for all the TUs of the given CU or PU. In this and all the further embodiments, emtCuFlag is not mandatory.

If emtCuFlag flag is set to true, the further processing is performed within a loop over the TUs. The index of the current TU processed in the loop is referred to as "idx" and is scanned from 0 to N-1, where N denotes the number of TUs in a CU or PU being processed. At the initialization step 405, the transform indexes emtTuIdx(idx) for each TU index are set to zero. The TU loop starts with a hiding condition check 410 that indicates whether hidden flag is present in the QTCs of the currently processed TU.

If the hiding condition 410 is false, the value of a flag that enables selection of transform for the processed TU (emtTuFlag) is parsed 412 from the bitstream. Otherwise the value of this flag is reconstructed or derived 411 from the QTCs by applying the check-function.

The computing means 208 is thus adapted to apply the check-function to the QTCs to obtain a result of the check-function, wherein the result of the check-function corresponds to the hidden information. This hidden information could be directly an index of the transform type to be selected or identified.

Alternatively, as shown in Fig. 4, this hidden information "emtTuFlag(idx)=checkFunc()" is adapted to identify the selected transform type in that, if the emtTuFlag value is true 420, the next step is to parse 422 transform type index emtTuIdx from the bitstream that indicates horizontal and vertical transform types. Otherwise, if the emtTuFlag value is false 420, a default transform type is selected by assigning emtTuIdx to zero.

Another embodiment contains the same processing steps as described with reference to Fig. 4, but with the difference that, in case the hiding condition 410 is false, then the emtTuFlag value is set to false. Particularly, then a default transform type is selected by assigning emtTuIdx to zero.

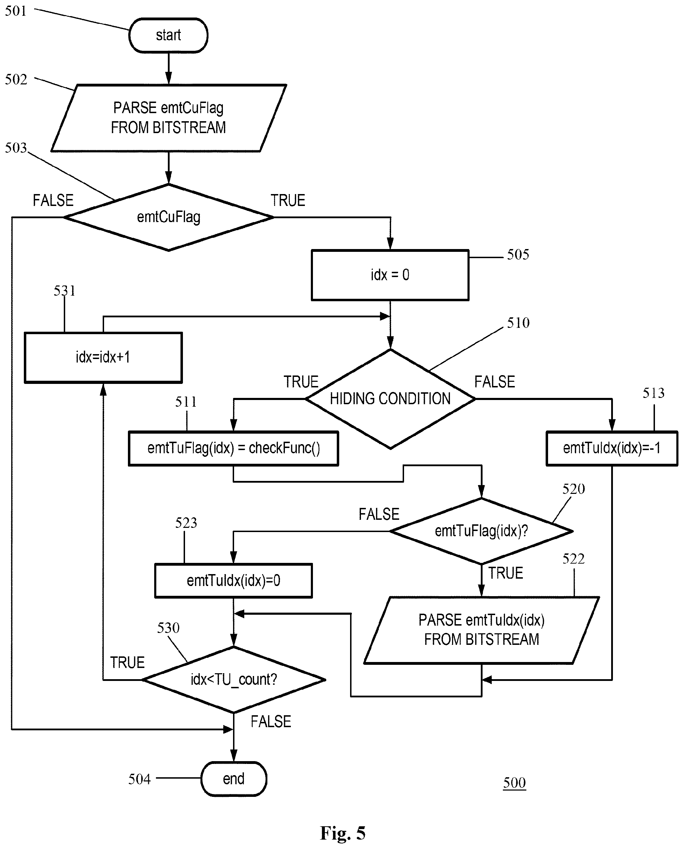

Fig. 5 shows a flowchart of a decoding method according to a further embodiment of the present invention.

This embodiment has, with respect to the embodiment of Fig. 4, different default transforms, each of the said transforms are applied in both vertical and horizontal directions, and are respectively selected in accordance with two cases:
- hiding condition is false;
- hiding condition is true, but emtTuIdx is zero.

For example, when the hiding condition 510 is false, emtTuIdx is -1 and DCT2 is applied 513 to both horizontal and vertical directions. In the other case, if the hiding condition 510 is true, but emtTuFlag is zero, DST2 is applied 523 in both horizontal and vertical directions. The remaining steps of Fig. 5 correspond to steps of Fig. 4.

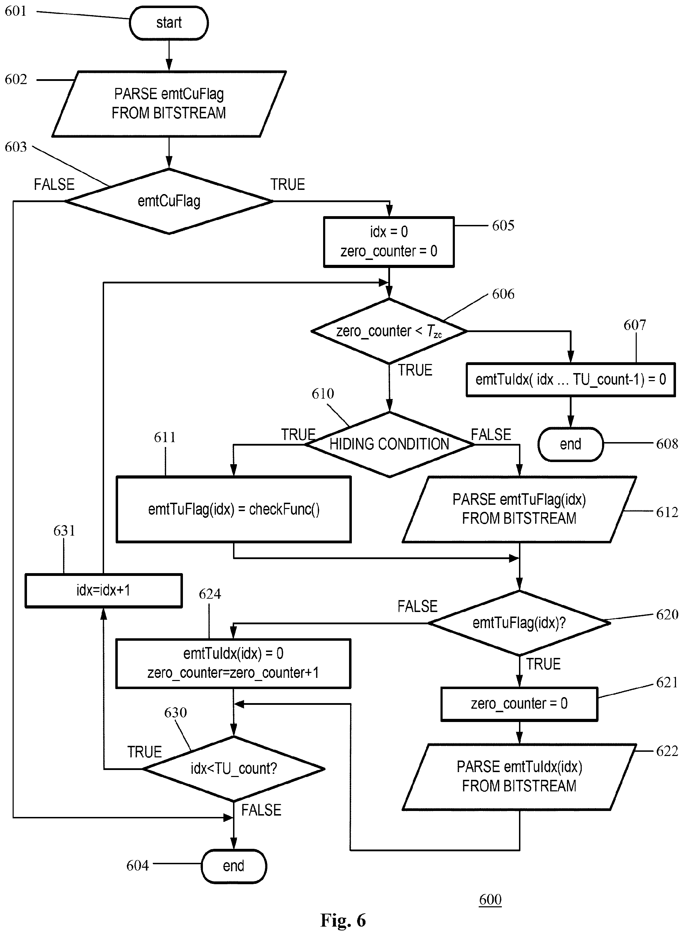

Fig. 6 shows a flowchart of a decoding method according to a further embodiment of the present invention.

In this embodiment, an additional condition check is introduced. The idea behind this embodiment relies on the fact that TUs are being processed in the same order during encoding and decoding. If several TUs processed consecutively within a processing order are indicated to have a default transform type, the rest of TUs is assumed to have the same default transform type, and a signaling for the rest of TUs is disabled thus reducing the overhead. The number of these consecutively processed TUs that can disable TU-level signaling is defined by a threshold value Tzc.

The modifications of the embodiment of Fig. 6 with respect to the embodiment of Fig. 4 are detailed in the followings. In step 605, the counter variable "zero_counter", which holds a current number of consecutively processed TUs that has emtTuFlag equal to zero, is initialized to "0". In step 606, the "zero_counter" value is compared to the threshold value Tzc. If the "zero_counter" is above or equal to the threshold value Tzc, then it is assumed that the rest of the TUs have the same default transform type, and the emtTuIdx is set 607 to "0". Otherwise, the hiding condition check 610, corresponding to reference 410 in Fig. 1, is carried out. As it could be seen from the flowchart of Fig. 6, the result of the comparison between "zero_counter" and Tzc controls the processing of the rest of the TUs in the given CU or PU. Another amendment relatively to Fig. 4 is that if a TU has a non-zero emtTuFlag, then "zero_counter" is reset 621 to zero. Otherwise, if a TU has a zero emtTuFlag, then the "zero_counter" is incremented 624.

The embodiments of Figs. 5 and 6 may also be combined.

In alternative embodiments, the emtCUFlag may be removed. The most important benefit caused by removing such a CU-level flag for transform is a possibility to reduce computational complexity due to avoiding a double-pass scheme when RD-costs of two different variants should be considered, i.e. for the flag's values of 0 and 1. On the other hand, the presence of a CU-level flag can minimize the signaling cost if one transform is much more frequently selected in a CU than others. So, the both options can be used subject to the respective optimization goal, i.e. either reducing complexity or increasing coding gain.

The invention solves the mentioned problem of reducing the signaling overhead when all the transforms including DCT-II (DCT2_EMT) are available on the TU level. This is reached by using data hiding for signaling whether DCT-II (or other transform subject to a prediction mode, size of a predicted block, etc.) is used or not. The invention in its multimedia coding embodiments provides the following advantages:
- It can be used in many potential applications in hybrid video coding framework that are compatible with JEM that is the foundation for a next-generation video coding standard.
- It provides a reduced BD-rate and subjective quality improvements in comparison with JEM1 in comparison with encoding this flag using CABAC.
- Each TU can be separately processed without decision making on the CU level.
- Redundant signaling (syntax), like emtCuFlag, may be avoided.

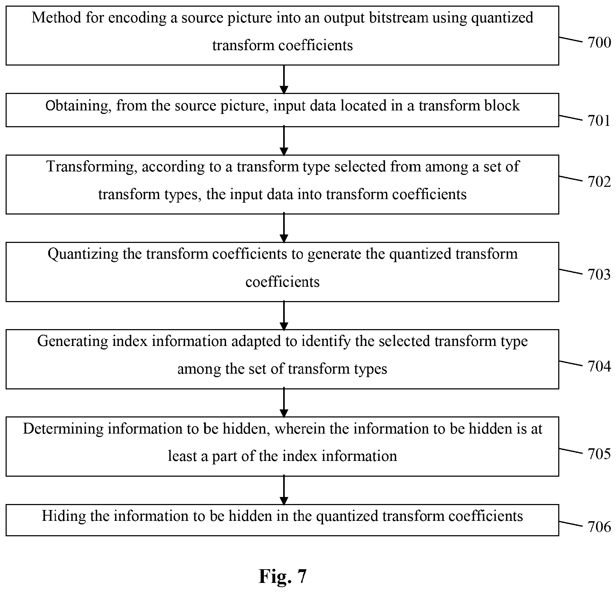

Fig. 7 shows a method 700 for encoding a source picture 101 into an output bitstream 114 using quantized transform coefficients 112 according to an embodiment of the present invention.

The method comprising obtaining 701, from the source picture 101, 301, input data 303 located in a transform block TU.

The method comprising transforming 702, according to a transform type selected from among a set of transform types 305, 310, the input data 303 into transform coefficients 110,306,311.

The method comprising quantizing 703 the transform coefficients 110, 306, 311 to generate the quantized transform coefficients 112, 308, 313.

The method comprising generating 704 index information adapted to identify the selected transform type among the set of transform types 305, 310.

The method comprising determining 705 information to be hidden, wherein the information to be hidden is at least a part of the index information.

The method comprising hiding 706 the information to be hidden in the quantized transform coefficients 112, 308, 313.

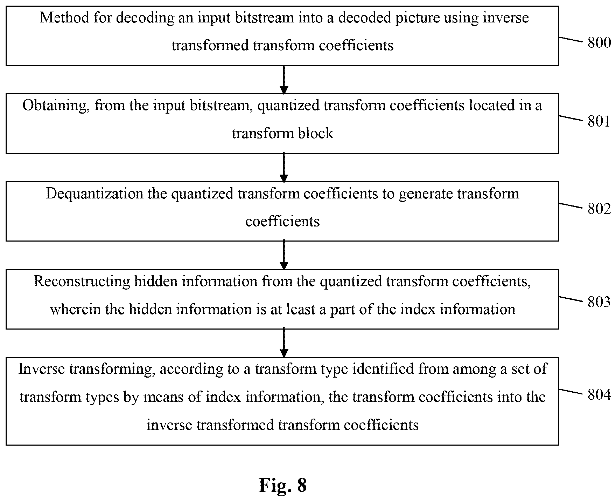

Fig. 8 shows a method 800 for decoding an input bitstream 201 into a decoded picture 212 using inverse transformed transform coefficients according to a further embodiment of the present invention.

The method comprises obtaining 801, from the input bitstream 201, quantized transform coefficients located in a transform block TU.

The method comprises dequantizing 802 the quantized transform coefficients to generate transform coefficients 210.

The method comprises reconstructing 803 hidden information from the quantized transform coefficients, wherein the hidden information is at least a part of the index information.

The method comprises inverse transforming 804, according to a transform type identified from among a set of transform types by means of index information, the transform coefficients 210 into the inverse transformed transform coefficients 212.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. Encoder (100, 300) for encoding a source picture (101, 301) into an output bitstream (114, 318) using quantized transform coefficients (112, 308, 313),
comprising:
- obtaining means (102, 104, 106, 302) adapted to obtain, from the source picture (101, 301), input data (303) located in a transform block (TU),
- transform means (109, 305, 310) adapted to transform, according to a transform type selected from among a set of transform types (305, 310), the input data (303) into transform coefficients (110, 306, 311),
- quantization means (111, 307, 312) adapted to quantize the transform coefficients (110, 306, 311) to generate the quantized transform coefficients (112, 308, 313),
- computing means (315) adapted to generate index information adapted to identify the selected transform type among the set of transform types (305, 310), and to determine information to be hidden, wherein the information to be hidden is a part of the index information,
- hiding means (319) adapted to hide the information to be hidden in the quantized transform coefficients (112, 308, 313); and
- signaling means (320), wherein the signaling means (320) is adapted to add, in the output bitstream (114, 318), signaling information being another part of the index information, so that the transform type selected among the set of transform types (305, 310) is identifiable based on the hidden information and the signaling information.

2. Encoder according to claim 1,
wherein the hiding means (319) is adapted to hide the information to be hidden in the quantized transform coefficients (112, 308, 313) depending on a hiding condition; wherein the hiding condition comprises a comparison of a parameter depending on the quantized transform coefficients (112, 308, 313) to a threshold, and
the hiding means (319) is adapted to check the hiding condition, and to hide the information to be hidden in the quantized transform coefficients (112, 308, 313) only if the hiding condition is true;
wherein, if the hiding condition is false, signaling means (320) is adapted to add, in the output bitstream (114, 318), signaling information being the index information.

3. Decoder (200) for decoding an input bitstream (201) into a decoded picture (212) using inverse transformed transform coefficients,
comprising:
- obtaining means (202, 204, 206) adapted to obtain, from the input bitstream (201), quantized transform coefficients located in a transform block (TU),
- dequantization means (209) adapted to dequantize the quantized transform coefficients to generate transform coefficients (210),
- computing means (208) adapted to reconstruct hidden information from the quantized transform coefficients, wherein the hidden information is a part of the index information,
- inverse transform means (211) adapted to inverse transform, according to a transform type identified from among a set of transform types by means of index information, the transform coefficients (210) into the inverse transformed transform coefficients (212); and
- extracting means adapted to extract, from the input bitstream (201), signaling information being another part of the index information, so that the transform type is identified from among the set of transform types based on the hidden information and the signaling information.

4. Decoder according to claims 3,
wherein the computing means (208) is adapted to reconstruct the hidden information from the quantized transform coefficients depending on a hiding condition.

5. Decoder according to claim 4,
wherein the hiding condition comprises a comparison of a parameter depending on the quantized transform coefficients to a threshold, and
the computing means (208) is adapted to check the hiding condition, and to reconstruct the hidden information from the quantized transform coefficients only if the hiding condition is true.

6. Decoder according to claim 5,
wherein, if the hiding condition is false, extracting means is adapted to extract, from the input bitstream (201), signaling information being the index information.

7. Decoder according to any of the preceding claims 3 to 6,
comprising inverse partitioning means adapted to obtain the decoded picture (212) by inverse partitioning a hierarchically layered data structure (CU, PU, TU, CG), one layer of the data structure being the transform block (TU),
wherein
- the computing means (208) is adapted to reconstruct a first part of the hidden information from a first layer of the data structure (CU, PU, TU, CG) and a second part of the hidden information from a second layer of the data structure (CU, PU, TU, CG) that is distinct from the first layer, or
- the hidden information is a part (emtTuFlag) of the index information, and the computing means (208) is adapted to reconstruct the hidden information from a first layer of the data structure (CU, PU, TU, CG) and extracting means is adapted to extract, from the input bitstream (201), signaling information being another part (emtCuFlag, emtTuIdx) of the index information in a second layer of the data structure (CU, PU, TU, CG) that is distinct from the first layer.

8. Decoder according to any of the preceding claims 3 to 7,
comprising inverse partitioning means adapted to obtain the decoded picture (212) by inverse partitioning a hierarchically layered data structure (CU, PU, TU, CG), one layer of the data structure being the transform block (TU),
wherein the inverse partitioning means is adapted to obtain the transform block (TU) by inverse partitioning a plurality of coefficient groups (CG), and
the computing means (208) is adapted to reconstruct the hidden information from the quantized transform coefficients located in at least one of the plurality of coefficient groups (CG).

9. Decoder according to any of the preceding claims 3 to 8,
wherein the computing means (208) is adapted to:
- apply a check-function to the quantized transform coefficients to obtain a result of the check-function,
wherein the result of the check-function corresponds to the hidden information.

10. Decoder according to any of the preceding claims 3 to 9,
wherein the hidden information comprises a flag (emtTuFlag) having a first and a second values,
the first value identifying that a default transform type of the set of transform types is the identified transform type, and
the second value indicating that the identified transform type is comprised in a sub-set consisting in the set of transform types without the default transform type.

11. Method (800) for decoding an input bitstream (201) into a decoded picture (212) using inverse transformed transform coefficients,
comprising:
- obtaining (801), from the input bitstream (201), quantized transform coefficients located in a transform block (TU),
- dequantizing (802) the quantized transform coefficients to generate transform coefficients (210),
- reconstructing (803) hidden information from the quantized transform coefficients, wherein the hidden information is a part of the index information,
- inverse transforming (804), according to a transform type identified from among a set of transform types by means of index information, the transform coefficients (210) into the inverse transformed transform coefficients (212); and
- extracting, from the input bitstream, signaling information being another part of the index information, so that the transform type is identified from among the set of transform types based on the hidden information and the signaling information.

12. Method according to claim 11, wherein the reconstructing the hidden information from the quantized transform coefficients depending on a hiding condition, and wherein the hiding condition comprises a comparison of a parameter depending on the quantized transform coefficients to a threshold, the method further comprising: checking the hiding condition, and reconstructing the hidden information from the quantized transform coefficients only if the hiding condition is true.

13. Method according to claim 11 or claim 12, wherein the method comprises:
applying a check-function to the quantized transform coefficients to obtain a result of the check-function, wherein the result of the check-function corresponds to the hidden information.

14. Method according to any one of claims 11 to 13, wherein the check-function is a parity check-function applied to the least significant bits of some quantized transform coefficients selected from a TU using a binary pattern.

15. Method according to any one of claims 11 to 13, wherein the check-function is a parity check-function applied to a position index of the last or first non-zero quantized transform coefficients or to a linear combination of last and first non-zero quantized transform coefficient position index.

## Patentansprüche

1. Kodierer (100, 300) zum Kodieren eines Quellbildes (101, 301) in einen Ausgabebitstrom (114, 318) unter Verwendung quantisierter Transformationskoeffizienten (112, 308, 313), umfassend:
- Erhaltemittel (102, 104, 106, 302), die angepasst sind, von dem Quellbild (101, 301) Eingabedaten (303) zu erhalten, die sich in einem Transformationsblock (TU) befinden,
- Transformationsmittel (109, 305, 310), die angepasst sind, gemäß einer aus einem Satz von Transformationsarten (305, 310) ausgewählten Transformationsart die Eingabedaten (303) in Transformationskoeffizienten (110, 306, 311) zu transformieren,
- Quantisierungsmittel (111, 307, 312), die angepasst sind, die Transformationskoeffizienten (110, 306, 311) zu quantisieren, um die quantisierten Transformationskoeffizienten (112, 308, 313) zu erzeugen,
- Rechenmittel (315), die angepasst sind, Indexinformationen zu erzeugen, die angepasst sind, die ausgewählte Transformationsart unter dem Satz von Transformationsarten (305, 310) zu identifizieren, und zu verbergende Informationen zu bestimmen, wobei die zu verbergenden Informationen ein Teil der Indexinformationen sind,
- Verbergungsmittel (319), die angepasst sind, die zu verbergenden Informationen in den quantisierten Transformationskoeffizienten (112, 308, 313) zu verbergen; und
- Signalisierungsmittel (320), wobei die Signalisierungsmittel (320) angepasst sind, in dem Ausgabebitstrom (114, 318) Signalisierungsinformationen hinzuzufügen, die ein weiterer Teil der Indexinformationen sind, so dass die unter dem Satz von Transformationsarten (305, 310) ausgewählte Transformationsart basierend auf den verborgenen Informationen und den Signalisierungsinformationen identifizierbar ist.

2. Kodierer nach Anspruch 1,
wobei die Verbergungsmittel (319) angepasst sind, die zu verbergenden Informationen in den quantisierten Transformationskoeffizienten (112, 308, 313) abhängig von einer Verbergungsbedingung zu verbergen;
wobei die Verbergungsbedingung einen Vergleich eines von den quantisierten Transformationskoeffizienten (112, 308, 313) abhängen Parameters mit einem Schwellenwert umfasst, und
die Verbergungsmittel (319) angepasst sind, die Verbergungsbedingung zu prüfen und die zu verbergenden Informationen in den quantisierten Transformationskoeffizienten (112, 308, 313) nur zu verbergen, wenn die Verbergungsbedingung wahr ist;
wobei, wenn die Verbergungsbedingung falsch ist, die Signalisierungsmittel (320) angepasst sind, in den Ausgabebitstrom (114, 318) Signalisierungsinformationen hinzuzufügen, die die Indexinformationen sind.

3. Dekodierer (200) zum Dekodieren eines Eingabebitstroms (201) in ein dekodiertes Bild (212) unter Verwendung von invers transformierten Transformationskoeffizienten, umfassend:
- Erhaltemittel (202, 204, 206), die angepasst sind, aus dem Eingabebitstrom (201) quantisierte Transformationskoeffizienten zu erhalten, die sich in einem Transformationsblock (TU) befinden,
- Dequantisierungsmittel (209), die angepasst sind, die quantisierten Transformationskoeffizienten zu dequantisieren, um Transformationskoeffizienten (210) zu erzeugen,
- Rechenmittel (208), die angepasst sind, verborgene Informationen aus den quantisierten Transformationskoeffizienten zu rekonstruieren, wobei die verborgenen Informationen ein Teil der Indexinformationen sind,
- Mittel zur inversen Transformation (211), die angepasst sind, gemäß einer Transformationsart, die aus einem Satz von Transformationsarten mittels Indexinformationen identifiziert wird, die Transformationskoeffizienten (210) in die invers transformierten Transformationskoeffizienten (212) invers zu transformieren; und
- Extraktionsmittel, die angepasst sind, aus dem Eingabebitstrom (201) Signalisierungsinformationen zu extrahieren, die ein weiterer Teil der Indexinformationen sind, so dass die Transformationsart aus dem Satz von Transformationsarten basierend auf den verborgenen Informationen und den Signalisierungsinformationen identifiziert wird.

4. Dekodierer nach Anspruch 3,
wobei die Rechenmittel (208) angepasst sind, die verborgenen Informationen aus den quantisierten Transformationskoeffizienten abhängig von einer Verbergungsbedingung zu rekonstruieren.

5. Dekodierer nach Anspruch 4,
wobei die Verbergungsbedingung einen Vergleich eines von den quantisierten Transformationskoeffizienten abhängen Parameters mit einem Schwellenwert umfasst, und
die Rechenmittel (208) angepasst sind, die Verbergungsbedingung zu prüfen und die verborgenen Informationen aus den quantisierten Transformationskoeffizienten nur zu rekonstruieren, wenn die Verbergungsbedingung wahr ist.

6. Dekodierer nach Anspruch 5,
wobei, wenn die Verbergungsbedingung falsch ist, die Extraktionsmittel angepasst sind, Signalisierungsinformationen, die die Indexinformationen sind, aus dem Eingabebitstrom (201) zu extrahieren.

7. Dekodierer nach einem der vorhergehenden Ansprüche 3 bis 6,
umfassend Mittel zum inversen Partitionieren, die angepasst sind, das decodierte Bild (212) durch inverses Partitionieren einer hierarchisch geschichteten Datenstruktur (CU, PU, TU, CG) zu erhalten, wobei eine Schicht der Datenstruktur der Transformationsblock (TU) ist,
wobei
- die Rechenmittel (208) angepasst sind, einen ersten Teil der verborgenen Informationen aus einer ersten Schicht der Datenstruktur (CU, PU, TU, CG) und einen zweiten Teil der verborgenen Informationen aus einer zweiten Schicht der Datenstruktur (CU, PU, TU, CG), die von der ersten Schicht verschieden ist, zu rekonstruieren, oder
- die verborgenen Informationen ein Teil (emtTuFlag) der Indexinformationen sind, und die Rechenmittel (208) angepasst sind, die verborgenen Informationen aus einer ersten Schicht der Datenstruktur (CU, PU, TU, CG) zu rekonstruieren, und Extraktionsmittel angepasst sind, aus dem Eingabebitstrom (201) Signalisierungsinformationen zu extrahieren, die ein anderer Teil (emtCuFlag, emtTuIdx) der Indexinformationen in einer zweiten Schicht der Datenstruktur (CU, PU, TU, CG) sind, die von der ersten Schicht verschieden ist.

8. Dekodierer nach einem der vorhergehenden Ansprüche 3 bis 7,
umfassend Mittel zum inversen Partitionieren, die angepasst sind, das decodierte Bild (212) durch inverses Partitionieren einer hierarchisch geschichteten Datenstruktur (CU, PU, TU, CG) zu erhalten, wobei eine Schicht der Datenstruktur der Transformationsblock (TU) ist,
wobei die Mittel zum inversen Partitionieren angepasst sind, den Transformationsblock (TU) durch inverses Partitionieren mehrerer Koeffizientengruppen (CG) zu erhalten, und
die Rechenmittel (208) angepasst sind, die verborgenen Informationen aus den quantisierten Transformationskoeffizienten zu rekonstruieren, die sich in mindestens einer der mehreren Koeffizientengruppen (CG) befinden.

9. Dekodierer nach einem der vorhergehenden Ansprüche 3 bis 8,
wobei die Rechenmittel (208) angepasst sind:
- eine Prüffunktion auf die quantisierten Transformationskoeffizienten anzuwenden, um ein Ergebnis der Prüffunktion zu erhalten,
wobei das Ergebnis der Prüffunktion den verborgenen Informationen entspricht.

10. Dekodierer nach einem der vorhergehenden Ansprüche 3 bis 9,
wobei die verborgenen Informationen ein Flag (emtTuFlag) mit einem ersten und einem zweiten Wert umfassen,
wobei der erste Wert identifiziert, dass eine Standardtransformationsart des Satzes von Transformationsarten die identifizierte Transformationsart ist, und
wobei der zweite Wert angibt, dass die identifizierte Transformationsart in einer Teilmenge umfasst ist, die in dem Satz der Transformationsarten ohne die Standardtransformationsart besteht.

11. Verfahren (800) zum Dekodieren eines Eingabebitstroms (201) in ein dekodiertes Bild (212) unter Verwendung von invers transformierten Transformationskoeffizienten,
umfassend:
- Erhalten (801), aus dem Eingabebitstrom (201), quantisierter Transformationskoeffizienten, die sich in einem Transformationsblock (TU) befinden,
- Dequantisieren (802) der quantisierten Transformationskoeffizienten, um Transformationskoeffizienten (210) zu erzeugen,
- Rekonstruieren (803) verborgener Informationen aus den quantisierten Transformationskoeffizienten, wobei die verborgenen Informationen ein Teil der Indexinformationen sind,
- inverses Transformieren (804), gemäß einer Transformationsart, die aus einem Satz von Transformationsarten mittels Indexinformationen identifiziert wird, der Transformationskoeffizienten (210) in die invers transformierten Transformationskoeffizienten (212); und
- Extrahieren, aus dem Eingabebitstrom, von Signalisierungsinformationen, die ein weiterer Teil der Indexinformationen sind, so dass die Transformationsart aus dem Satz von Transformationsarten basierend auf den verborgenen Informationen und den Signalisierungsinformationen identifiziert wird.

12. Verfahren nach Anspruch 11, wobei das Rekonstruieren der verborgenen Informationen aus den quantisierten Transformationskoeffizienten von einer Verbergungsbedingung abhängt, und wobei die Verbergungsbedingung einen Vergleich eines von den quantisierten Transformationskoeffizienten abhängigen Parameters mit einem Schwellenwert umfasst, wobei das Verfahren ferner umfasst: Prüfen der Verbergungsbedingung und Rekonstruieren der verborgenen Informationen aus den quantisierten Transformationskoeffizienten nur dann, wenn die Verbergungsbedingung wahr ist.

13. Verfahren nach Anspruch 11 oder Anspruch 12, wobei das Verfahren umfasst:
Anwenden einer Prüffunktion auf die quantisierten Transformationskoeffizienten, um ein Ergebnis der Prüffunktion zu erhalten, wobei das Ergebnis der Prüffunktion den verborgenen Informationen entspricht.

14. Verfahren nach einem der Ansprüche 11 bis 13, wobei die Prüffunktion eine Paritätsprüffunktion ist, die auf die niederwertigsten Bits einiger quantisierter Transformationskoeffizienten angewandt wird, die unter Verwendung eines binären Musters aus einer TU ausgewählt werden.

15. Verfahren nach einem der Ansprüche 11 bis 13, wobei die Prüffunktion eine Paritätsprüffunktion ist, die auf einen Positionsindex des letzten oder ersten nicht null-quantisierten Transformationskoeffizienten oder auf eine Linearkombination des Positionsindexes des letzten und ersten nicht null-quantisierten Transformationskoeffizienten angewandt wird.

## Revendications

1. Codeur (100, 300) pour coder une image source (101, 301) en un train binaire de sortie (114, 318) en utilisant des coefficients de transformation quantifiés (112, 308, 313), comprenant :
- un moyen d'obtention (102, 104, 106, 302) adapté pour obtenir, à partir de l'image source (101, 301), des données d'entrée (303) situées dans un bloc de transformation (TU),
- un moyen de transformation (109, 305, 310) adapté pour transformer, selon un type de transformation sélectionné parmi un ensemble de types de transformation (305, 310), les données d'entrée (303) en coefficients de transformation (110, 306, 311),
- un moyen de quantification (111, 307, 312) adapté pour quantifier les coefficients de transformation (110, 306, 311) pour générer les coefficients de transformation quantifiés (112, 308, 313),
- un moyen de calcul (315) adapté pour générer des informations d'indice adaptées pour identifier le type de transformation sélectionné parmi l'ensemble de types de transformation (305, 310), et pour déterminer des informations à masquer, dans lequel les informations à masquer sont une partie des informations d'indice,
- un moyen de masquage (319) adapté pour masquer les informations à masquer dans les coefficients de transformation quantifiés (112, 308, 313) ; et
- un moyen de signalisation (320), dans lequel le moyen de signalisation (320) est adapté pour ajouter, dans le train binaire de sortie (114, 318), des informations de signalisation qui sont une autre partie des informations d'indice, de sorte que le type de transformation sélectionné parmi l'ensemble de types de transformation (305, 310) est identifiable sur la base des informations masquées et des informations de signalisation.

2. Codeur selon la revendication 1,
dans lequel le moyen de masquage (319) est adapté pour masquer les informations à masquer dans les coefficients de transformation quantifiés (112, 308, 313) en fonction d'une condition de masquage ; dans lequel la condition de masquage comprend une comparaison d'un paramètre dépendant des coefficients de transformation quantifiés (112, 308, 313) à un seuil, et
le moyen de masquage (319) est adapté pour vérifier la condition de masquage, et pour masquer les informations à masquer dans les coefficients de transformation quantifiés (112, 308, 313) uniquement si la condition de masquage est vraie ;
dans lequel, si la condition de masquage est fausse, le moyen de signalisation (320) est adapté pour ajouter, dans le train binaire de sortie (114, 318), des informations de signalisation qui sont les informations d'indice.

3. Décodeur (200) pour décoder un train binaire d'entrée (201) en une image décodée (212) en utilisant des coefficients de transformation transformés de manière inverse, comprenant :
- un moyen d'obtention (202, 204, 206) adapté pour obtenir, à partir du flux binaire d'entrée (201), des coefficients de transformation quantifiés situés dans un bloc de transformation (TU),
- un moyen de déquantification (209) adapté pour déquantifier les coefficients de transformation quantifiés pour générer des coefficients de transformation (210),
- un moyen de calcul (208) adapté pour reconstruire des informations masquées à partir des coefficients de transformation quantifiés, dans lequel les informations masquées sont une partie des informations d'indice,
- un moyen de transformation inverse (211) adapté pour transformer de manière inverse, selon un type de transformation identifié parmi un ensemble de types de transformation au moyen d'informations d'indice, les coefficients de transformation (210) en les coefficients de transformation transformés de manière inverse (212) ; et
- un moyen d'extraction adapté pour extraire, à partir du flux binaire d'entrée (201), des informations de signalisation qui sont une autre partie des informations d'indice, de sorte que le type de transformation est identifié parmi l'ensemble de types de transformation sur la base des informations masquées et des informations de signalisation.

4. Décodeur selon la revendication 3,
dans lequel le moyen de calcul (208) est adapté pour reconstruire les informations masquées à partir des coefficients de transformation quantifiés en fonction d'une condition de masquage.

5. Décodeur selon la revendication 4,
dans lequel la condition de masquage comprend une comparaison d'un paramètre dépendant des coefficients de transformation quantifiés à un seuil, et
le moyen de calcul (208) est adapté pour vérifier la condition de masquage, et pour reconstruire les informations masquées à partir des coefficients de transformation quantifiés uniquement si la condition de masquage est vraie.

6. Décodeur selon la revendication 5,
dans lequel, si la condition de masquage est fausse, le moyen d'extraction est adapté pour extraire, à partir du flux binaire d'entrée (201), des informations de signalisation qui sont les informations d'indice.

7. Décodeur selon l'une quelconque des revendications précédentes 3 à 6,
comprenant un moyen de partitionnement inverse adapté pour obtenir l'image décodée (212) par partitionnement inverse d'une structure de données à couches hiérarchiques (CU, PU, TU, CG), une couche de la structure de données étant le bloc de transformation (TU),
dans lequel
- le moyen de calcul (208) est adapté pour reconstruire une première partie des informations masquées à partir d'une première couche de la structure de données (CU, PU, TU, CG) et une seconde partie des informations masquées à partir d'une seconde couche de la structure de données (CU, PU, TU, CG) qui est distincte de la première couche, ou
- les informations masquées sont une partie (emtTuFlag) des informations d'indice, et le moyen de calcul (208) est adapté pour reconstruire les informations masquées à partir d'une première couche de la structure de données (CU, PU, TU, CG) et le moyen d'extraction est adapté pour extraire, à partir du train binaire d'entrée (201), des informations de signalisation qui sont une autre partie (emtCuFlag, emtTuIdx) des informations d'indice dans une seconde couche de la structure de données (CU, PU, TU, CG) qui est distincte de la première couche.

8. Décodeur selon l'une quelconque des revendications précédentes 3 à 7,
comprenant un moyen de partitionnement inverse adapté pour obtenir l'image décodée (212) par partitionnement inverse d'une structure de données à couches hiérarchiques (CU, PU, TU, CG), une couche de la structure de données étant le bloc de transformation (TU),
dans lequel le moyen de partitionnement inverse est adapté pour obtenir le bloc de transformation (TU) par partitionnement inverse d'une pluralité de groupes de coefficients (CG), et
le moyen de calcul (208) est adapté pour reconstruire les informations masquées à partir des coefficients de transformation quantifiés situés dans au moins l'un de la pluralité de groupes de coefficients (CG).

9. Décodeur selon l'une quelconque des revendications précédentes 3 à 8,
dans lequel le moyen de calcul (208) est adapté pour :
- appliquer une fonction de vérification aux coefficients de transformation quantifiés pour obtenir un résultat de la fonction de vérification,
dans lequel le résultat de la fonction de vérification correspond aux informations masquées.

10. Décodeur selon l'une quelconque des revendications précédentes 3 à 9,
dans lequel les informations masquées comprennent un drapeau (emtTuFlag) ayant une première et une seconde valeur,
la première valeur identifiant qu'un type de transformation par défaut de l'ensemble de types de transformation est le type de transformation identifié, et
la seconde valeur indiquant que le type de transformation identifié est compris dans un sous-ensemble constitué par l'ensemble de types de transformation sans le type de transformation par défaut.

11. Procédé (800) pour décoder un train binaire d'entrée (201) en une image décodée (212) en utilisant des coefficients de transformation transformés de manière inverse, comprenant de :
- obtenir (801), à partir du train binaire d'entrée (201), des coefficients de transformation quantifiés situés dans un bloc de transformation (TU),
- déquantifier (802) les coefficients de transformation quantifiés pour générer des coefficients de transformation (210),
- reconstruire (803) des informations masquées à partir des coefficients de transformation quantifiés, dans lequel les informations masquées sont une partie des informations d'indice,
- transformer de manière inverse (804), selon un type de transformation identifié parmi un ensemble de types de transformation au moyen d'informations d'indice, les coefficients de transformation (210) en les coefficients de transformation transformés de manière inverse (212) ; et
- extraire, à partir du flux binaire d'entrée, des informations de signalisation qui sont une autre partie des informations d'indice, de sorte que le type de transformation est identifié parmi l'ensemble de types de transformation sur la base des informations masquées et des informations de signalisation.

12. Procédé selon la revendication 11, dans lequel la reconstruction des informations masquées à partir des coefficients de transformation quantifiés dépend d'une condition de masquage, et dans lequel la condition de masquage comprend une comparaison d'un paramètre dépendant des coefficients de transformation quantifiés à un seuil, le procédé comprenant en outre de : vérifier la condition de masquage, et reconstruire les informations masquées à partir des coefficients de transformation quantifiés uniquement si la condition de masquage est vraie.

13. Procédé selon la revendication 11 ou la revendication 12, le procédé comprenant de : appliquer une fonction de vérification aux coefficients de transformation quantifiés pour obtenir un résultat de la fonction de vérification, dans lequel le résultat de la fonction de vérification correspond aux informations masquées.

14. Procédé selon l'une quelconque des revendications 11 à 13, dans lequel la fonction de vérification est une fonction de vérification de parité appliquée aux bits les moins significatifs de certains coefficients de transformation quantifiés sélectionnés à partir d'un TU en utilisant un motif binaire.

15. Procédé selon l'une quelconque des revendications 11 à 13, dans lequel la fonction de vérification est une fonction de vérification de parité appliquée à un indice de position du dernier ou du premier coefficient de transformation quantifié non nul ou à une combinaison linéaire d'indice de position du dernier et du premier coefficient de transformation quantifié non nul.
